# EUROPEAN PATENT SPECIFICATION

(11) **EP 1 607 321 B1**
(45) Date of publication and mention of the grant of the patent: **27.05.2009**
(21) Application number: 05012545.9
(22) Date of filing: 10.06.2005
(51) Int. Cl.: B62M 25/08, B62J 99/00, B62K 19/30

(54) **Bicycle control apparatus**
Fahrradsteuerapparat
Dispositif de commande de bicyclette

(30) Priority: 18.06.2004 JP 2004180734
(43) Date of publication of application: 21.12.2005
(73) Proprietor: SHIMANO INC., Osaka 590-8577 (JP)
(72) Inventor: Watarai, Etsuyoshi, Osaka (JP)
(74) Representative: Hofmann, Harald

(56) References cited:
- EP-A- 0 268 338
- EP-A- 1 516 807
- WO-A-95/17329
- CA-A1- 2 099 395
- DE-A1- 3 234 151
- DE-A1- 3 921 782
- GB-A- 2 260 009
- US-A- 5 618 052
- US-A1- 2003 107 479

## Description

### BACKGROUND OF THE INVENTION

The present invention is directed to an assembly comprising a seat post and a bicycle control apparatus.

Many bicycles have electronically operated components as well as control devices used to control the operation of such components. For example, Japanese Unexamined Patent Application No. 2004-247074 discloses a bicycle with an electronically controlled bicycle transmission. Conventional electronically controlled bicycle transmissions include an electronic drive mechanism such as a motor and deceleration mechanism that moves one or more of the transmission components. The transmission may be a derailleur or a hub transmission that includes an internal planetary gear mechanism. The electronic drive mechanism may be formed integrally with the electronically operated component, or it may be mounted to the bicycle frame separately from the electronically operated component. The control device used to control the operation of the electronically operated component also is mounted to the bicycle, typically on the handlebar together with a cycle computer. Document EP 1 516 807, which is an intermediate document, describes a bicycle control apparatus comprising a mounting member, a control unit disposed on the mounting member, dimensioned to fit within the steerer tube of a bicycle. Document WO 95/17329 A discloses bicycle apparatus component according to preamble of claim 1.

The mounting of the various electronic components on the bicycle tends to make the bicycle appear cluttered and visually unattractive. Furthermore, depending on where the electronic components are mounted, there is a risk that the components may obstruct steering. Sometimes the control device is integrated with a detachable cycle computer in an attempt to reduce the number of components mounted to the bicycle. However, then the electrically operated component cannot be operated when the cycle computer is detached or lost.

### SUMMARY OF THE INVENTION

The present invention is directed to various features of an assembly comprising a seat post and a bicycle control apparatus that may be mounted in a seat tube. In one embodiment, the bicycle control apparatus comprises a mounting member and a control unit having a control signal output terminal that outputs an output control signal to operate a moving bicycle component. The control unit is disposed on the mounting member, and the mounting member and the control unit are dimensioned to fit within a seat tube of a bicycle. The control unit is disposed within the housing, and the mounting member includes a post mounting structure structured to mount the mounting post to the seat post. Additional inventive features will become apparent from the description below.

### BRIEF DESCRIPTION OF THE DRAWINGS

Fig. 1 is a side view of a particular embodiment of a bicycle;

Fig. 2 is a more detailed view of the seat assembly;

Fig. 3 is a front view of particular embodiments of brake lever assemblies mounted to the bicycle handlebar;

Fig. 4 is an exploded cross sectional view of a particular embodiment of a seat post and an electronic component adapted to be mounted therein;

Fig. 5 is a schematic block diagram of a particular embodiment of a derailleur control apparatus;

Fig. 6 is a schematic diagram of the front and rear sprocket assemblies;

Fig. 7 is an exploded cross sectional view of an alternative embodiment of a seat post and an electronic component adapted to be mounted therein;

Fig. 8 shows an embodiment of wiring for electrical components mounted to the bicycle;

Fig. 9 is a schematic block diagram of another embodiment of a derailleur control apparatus that may be used with the hub dynamo shown in Fig. 8;

Fig. 10 is a side view of another embodiment of a bicycle; and

Fig. 11 is a schematic block diagram of a particular embodiment of a suspension control apparatus used with the bicycle shown in Fig. 10.

### DETAILED DESCRIPTION OF THE EMBODIMENTS

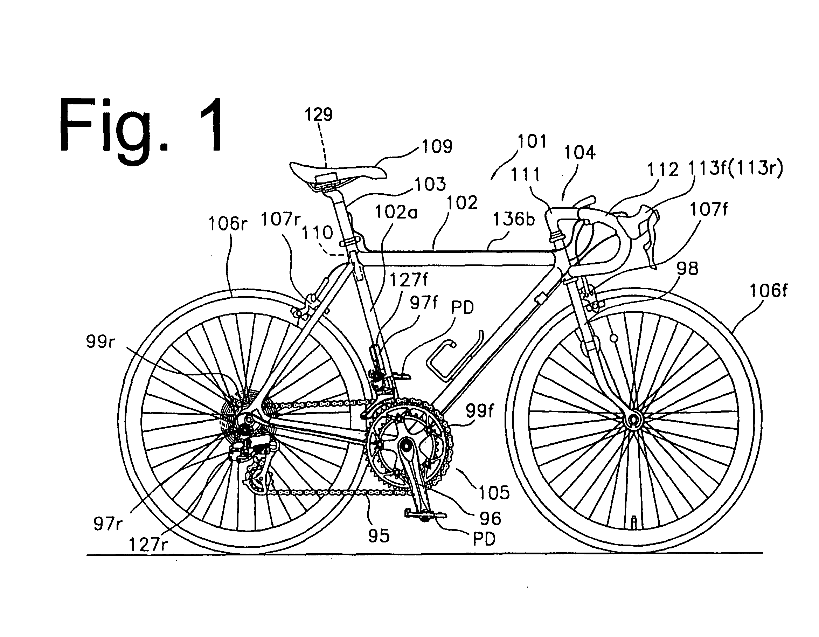

Fig. 1 is a side view of a bicycle 101 that includes particular embodiments of electrically operated components. Bicycle 101 is road bicycle comprising a diamond-shaped frame 102, a front fork 98 rotatably mounted to frame 102, a handlebar assembly 104 mounted to the upper part of fork 98, a front wheel 106f rotatably attached to the lower part of fork 98, a rear wheel 106r rotatably attached to the rear of frame 102, and a drive unit 105. A front wheel brake 107f is provided for braking front wheel 106f, and a rear wheel brake 107r is provided for braking rear wheel 106r.

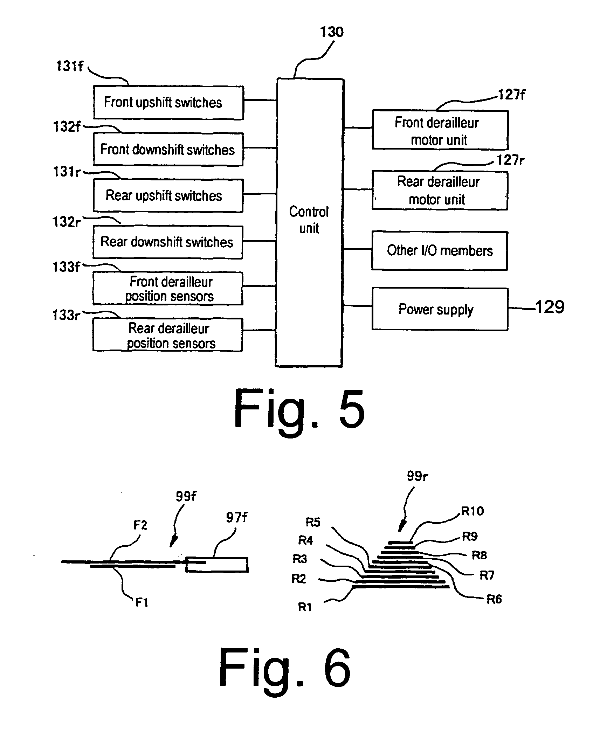

Drive unit 105 comprises a chain 95, a front sprocket assembly 99f coaxially mounted with a crank 96 having pedals PD, an electrically controlled front derailleur 97f attached to a seat tube 102a of frame 102, a rear sprocket assembly 99r coaxially mounted with rear wheel 106r, and an electrically controlled rear derailleur 97r. As shown in Fig. 6, front sprocket assembly 99f comprises two coaxially mounted sprockets F1-F2, and rear sprocket assembly 99r comprises ten coaxially mounted sprockets R1-R10. The number of teeth on front sprocket F1 is less than the number of teeth on rear sprocket F2. The numbers of teeth on rear sprockets R1-R10 gradually decrease from rear sprocket R1 to rear sprocket R10. As a result, rear sprocket R1 has the greatest number of teeth, and rear sprocket R10 has the least number of teeth. Front derailleur 97f switches chain 95 between selected ones of the front sprockets F1-F2, and rear derailleur 97r switches chain 95 among selected ones of the rear sprockets R1-R10. Front derailleur 97f is driven by a front derailleur motor unit 127f (Fig. 5), and rear derailleur 97r is driven by a rear derailleur motor unit 127r. A front derailleur position sensor 133f senses the operating position of front derailleur 97f, and a rear derailleur position sensor 133r senses the operating position of rear derailleur 97r. A power supply 129 powers front and rear derailleur motor units 127f and 127r as well as other electrical components described herein. Power supply 129 may comprise a battery, a secondary power supply such as a large capacity capacitor, or some other power source.

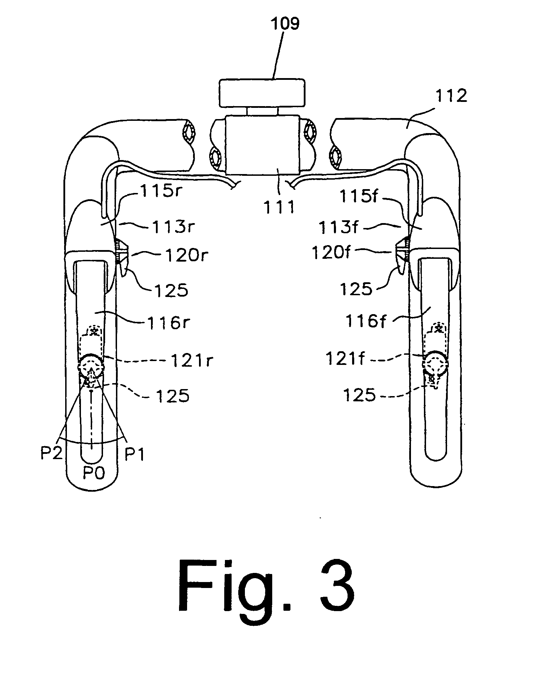

Handlebar assembly 104 comprises a handlebar stem 111 and a drop-style handlebar 112, wherein handlebar stem 111 is mounted to the upper part of fork 98, and handlebar 112 is mounted to the forward end portion of handlebar stem 111. As shown in Fig. 3, brake lever assemblies 113f and 113r are mounted at opposite sides of handlebar 112. Brake lever assembly 113f controls the operation of front wheel brake 107f, and brake lever assembly 113r controls the operation of rear wheel brake 107r. A cycle computer 109 is mounted to a central portion of handlebar 112.

Brake lever assemblies 113f and 113r comprise respective brake brackets 115f and 115r mounted to the forward curved portions of handlebar 112, and brake levers 116f and 116r pivotably mounted to brake brackets 115f and 115r. Front shift control devices 120f and 121f with switch levers 125 are mounted to the inner side of brake bracket 115f and to the rear side of brake lever 116f, respectively, to control the operation of front derailleur 97f. In this embodiment, front shift control devices 120f and 121f independently control the operation of front derailleur 97f so that the rider may control the operation of front derailleur 97f with the hand grasping brake bracket 115f or with the hand grasping brake lever 116f. The switch lever 125 mounted to brake lever bracket 115f rotates downward from a home position P0 to a first position P1 and rotates upward from the home position P0 to a second position P2 to control the operation of front derailleur 97f. The switch lever 125 mounted to the rear of brake lever 116f rotates laterally inward from a home position P0 to a first position P1 and rotates laterally outward from the home position P0 to a second position P2 to control the operation of front derailleur 97f. Similarly, independent rear shift control devices 120r and 121r with switch levers 125 are mounted to the inner side of brake bracket 115r and to the rear side of brake lever 116r, respectively, to control the operation of rear derailleur 97r. The switch levers 125 mounted to brake lever bracket 115r and brake lever 116r operate in the same manner as switch levers 125 mounted to brake lever bracket 115f and brake lever 116f. All of the switch levers 125 are biased toward the home position P0.

A front upshift switch 131f (Fig. 5) and a front downshift switch 132f are mounted in each front shift control device 120f and 121f. The front upshift switches 131f operate when switch levers 125 in front shift control devices 120f and 121f rotate from position P0 to position P1, and the front downshift switches 132f operate when switch levers 125 in front shift control devices 120f and 121f rotate from position P0 to position P2. Similarly, a rear upshift switch 131r and a rear downshift switch 132r are mounted in each rear shift control device 120r and 121r. The rear upshift switches 131r operate when switch levers 125 in rear shift control devices 120r and 121r rotate from position P0 to position P1, and the rear downshift switches 132r operate when switch levers 125 in rear shift control devices 120r and 121r rotate from position P0 to position P2.

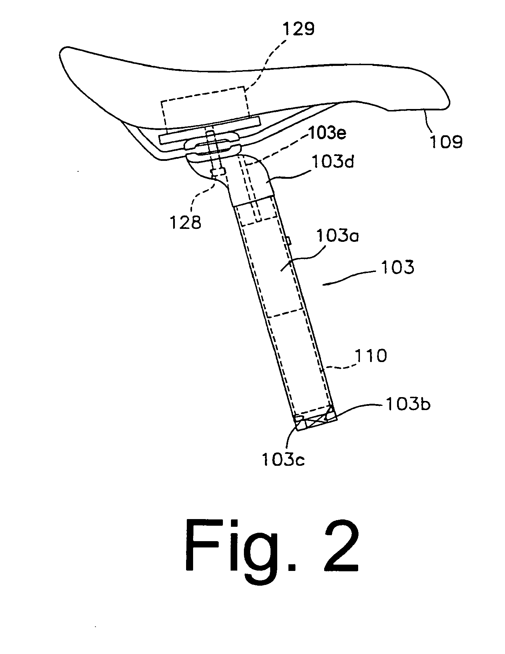

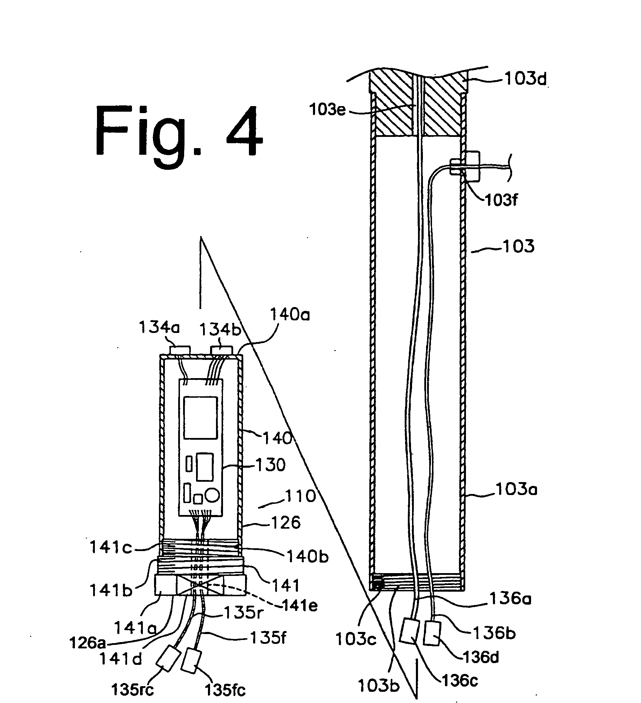

As shown in Figs. 1 and 2, a seat post 103 is detachably mounted within seat tube 102a of frame 102. A saddle 109 is mounted to the top of seat post 103, and a derailleur control apparatus 110 is mounted within seat post 103 at a bottom portion thereof. Seat post 103 comprises a pipe member 103a dimensioned to fit within seat tube 102a, a circuit mounting structure 103b disposed at the bottom of pipe member 103a for mounting derailleur control apparatus 110, and a saddle mounting structure 103d disposed at the top of pipe member 103a for mounting saddle 109. In this embodiment, circuit mounting structure 103b comprises a female threaded portion 103c formed on an inner peripheral surface of pipe member 103a, and saddle mounting structure 103d comprises a generally solid member that may be secured to pipe member 103a by welding or press fitting, for example. Saddle 109 may be fixed to saddle mounting member 103d by a bolt 128 or through some other means. As shown in Fig. 4, an opening 103f is formed in a side wall of pipe member 103a for passing a signal input line 136b therethrough. Signal input line 136b communicates signals from front and rear upshift and downshift switches 131f, 132f, 131r and 132r to derailleur control apparatus 110, and it includes a detachable connector 136d.

In this embodiment, power supply 129 is mounted within saddle 109 to hide it from view and to locate it close to derailleur control apparatus 110. An opening 103e is formed in saddle mounting structure 103d for passing a power supply input line 136a therethrough. Power supply input line 136a supplies operating power to derailleur control apparatus, and it includes a detachable connector 136c.

As shown in Figs. 4 and 5, derailleur control apparatus 110 comprises a mounting member in the form of a housing 126 and a derailleur control unit 130 disposed within housing 126. Housing 126 comprises a tubular member 140 and a cover member 141, wherein housing 126 houses control unit 130, and cover member 141 is mounted to the lower end of tubular member 140. Tubular member 140 has an outer diameter slightly smaller than an inner diameter seat post 103 so that tubular member 140 fits within seat post 103. Tubular member 140 has an upper wall 140a on which is mounted an exposed power supply input terminal 134a and an exposed signal input terminal 134b for detachably connecting to connectors 136c and 136d of power supply input line 136a and signal input line 136b, respectively. A female threaded portion 140b is formed on the inner peripheral surface of a lower end of tubular member 140.

Cover member 141 generally has the shape of a stepped bolt, and it comprises a head 141a, a post mounting structure in the form of a first male threaded portion 141b, and a second male threaded portion 141c. Head 141a has an outer diameter slightly smaller than an inner diameter of seat tube 102a, first male threaded portion 141b has a diameter slightly smaller than the diameter of head 141a, and second male threaded portion 141c has a diameter slightly smaller than the diameter of first male threaded portion 141b. Second male threaded portion 141c is dimensioned to screw into female threaded portion 140b in tubular member 140 so that the abutment formed by the change in diameter between first male threaded portion 141b and second male threaded portion 141c abuts against the end face of tubular member 140. First male threaded portion 141b may be screwed into female threaded portion 103c in pipe member 103a of seat post 103 after cover member 141 is screwed into tubular member 140. The abutment formed by the change in diameter between head 141a and first male threaded portion 141b abuts against the end face of pipe member 103a, thereby mounting derailleur control apparatus 110 into seat post 103. A tool engaging structure 141d in the form of a pair of flats (only one flat is shown in Fig. 4) is formed on head 141a so that cover member 141 may be screwed into tubular member 140 and seat post 103 using an appropriate tool.

An opening 141e is formed through head 141a for receiving front and rear signal wires 135f and 135r therethrough, wherein front and rear signal wires 135f and 135r have detachable connectors 135fc and 135rc at their corresponding ends. Front and rear signal wires 135f and 135r communicate signals from control unit 130 to front derailleur motor drive unit 127f and to rear derailleur motor unit 127r, respectively. Front and rear signal wires 135f and 135r also communicate signals from front and rear derailleur position sensors 133f and 133r to control unit 130.

In this embodiment, control unit 130 is a programmed microprocessor. As shown in Fig. 5, front derailleur motor unit 127f, rear derailleur motor unit 127r, power supply 129, front upshift switches 131f, front downshift switches 132f, rear upshift switches 131r, rear downshift switches 132r, front derailleur position sensor 133f, rear derailleur position sensor 133r and other I/O components are connected to control unit 130. Control unit 130 controls the operation of front derailleur 97f and rear derailleur 97r to shift chain 95 the distance from an origin sprocket to a destination sprocket in accordance with signals received from front and rear upshift switches 131f and 131r, front and rear downshift switches 132f and 132r, and front and rear derailleur position sensors 133f and 133r.

During assembly, initially cover member 141 is tightly screwed into tubular member 140 using second male threaded portion 141c in cover member 141 and female threaded portion 140b in tubular member 140. Then, connector 136c of power supply input line 136a and connector 136d of signal input line 136b are connected to power supply input terminal 134a and signal input terminal 134b, respectively, on upper wall 140a of tubular member 140. After that, housing 126 is tightly screwed into pipe member 103a of seat pillar 103 using first male threaded portion 141b in cover member 141 and female threaded portion 103c in seat post 103. Seat post 103 then is mounted into seat tube 102a of frame body 102. Finally, the front and rear signal lines 135f and 135r are routed out from seat tube 102a and connected to front and rear derailleur motor units 127f and 127r, respectively.

When one of the front upshift switches 131f is turned on by operating one of the front shift control devices 120f and 121f and front derailleur 97f currently is positioned for engaging chain 95 with front sprocket F1, then an upshift command signal is input to control unit 130 through signal input line 136b, and a command to upshift front derailleur 97f to front sprocket F2 is output to front derailleur motor unit 127f through front signal wire 135f. Front derailleur motor unit 127f then moves front derailleur 97f from front sprocket F1 to front sprocket F2. Similarly, when one of the front downshift switches 132f is turned on by operating one of the front shift control devices 120f and 121f and front derailleur 97f currently is positioned for engaging chain 95 with front sprocket F2, then a downshift command signal is input to control unit 130 through signal input line 136b, and a command to downshift front derailleur 97f to front sprocket F1 is output to front derailleur motor unit 127f through front signal wire 135f. Front derailleur motor unit 127f then moves front derailleur 97f from front sprocket F2 to sprocket F1. The operation of rear derailleur 97r is similar.

Since the derailleur control apparatus 110 is stored in seat post 103, it is hidden from view and does not detract from the appearance of the bicycle or interfere with the operation of the bicycle. Since seat post 103 usually is not detached from the bicycle, derailleur control apparatus 110 always is available fir use, even when cycle computer 109 is detached. On the other hand, since seat post 103 is easily removed from seat tube 102a, derailleur control apparatus 110 may be easily removed for maintenance, replacement or repair.

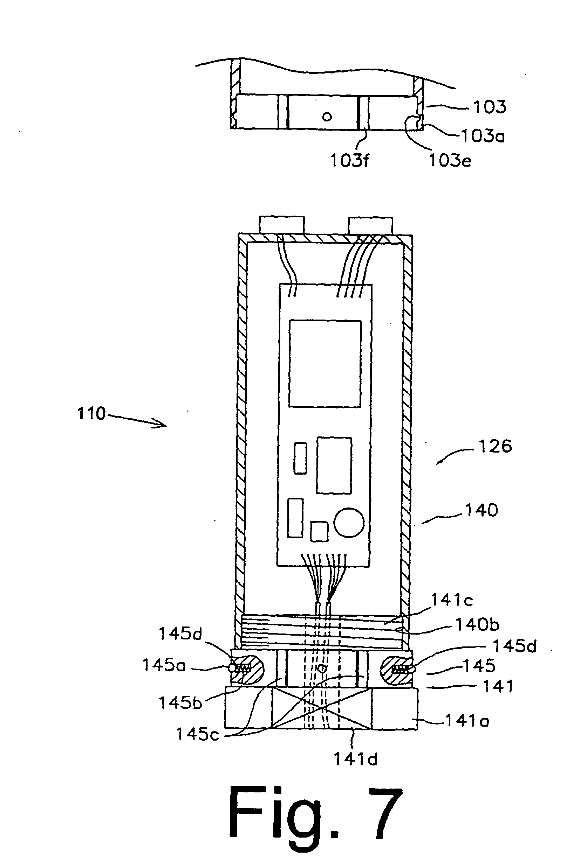

Fig. 7 is an exploded cross sectional view of an alternative embodiment of a seat post 103 and a derailleur control apparatus 110 adapted to be mounted therein. In this embodiment, cover member 141 is screwed into tubular member 140 as in the above embodiment, but housing 126 is mounted to seat post 103 in a different manner. More specifically, first male threaded portion 141b of cover member 141 in the first embodiment is replaced by a post mounting structure 145 which also has an outer diameter less than the diameter of the inner peripheral surface of pipe member 103a. Post mounting structure 145 comprises a plurality of movable projections in the form of retaining balls 145a slidingly retained in a corresponding plurality of retaining holes 145d and biased radially outwardly by a corresponding plurality of springs 145b. Post mounting structure 145 also includes a plurality of stationary projections in the form of rectangular male splines 145c. Seat post 103 is modified by replacing female threaded portion 103c with a plurality of recesses in the form of hemispherical grooves 103e and another plurality of recesses in the form of rectangular female splines 103f.

The foregoing structures are dimensioned such that, when housing 126 is inserted into pipe member 103a of seat tube 103, male splines 145c on cover member 141 engage female splines 103f in pipe member 103a. Retaining balls 145a initially are pushed radially inwardly when cover member 141 enters the end tip of pipe member 103a, but they subsequently expand to engage hemispherical grooves 103e when housing 126 is fully installed and the abutment between head 141 and post mounting structure 145 contacts the end face of pipe member 103a. This detachably locks housing 126 to seat tube 103 in a manner that does not twist power supply input line 136a and signal input line 136b during assembly.

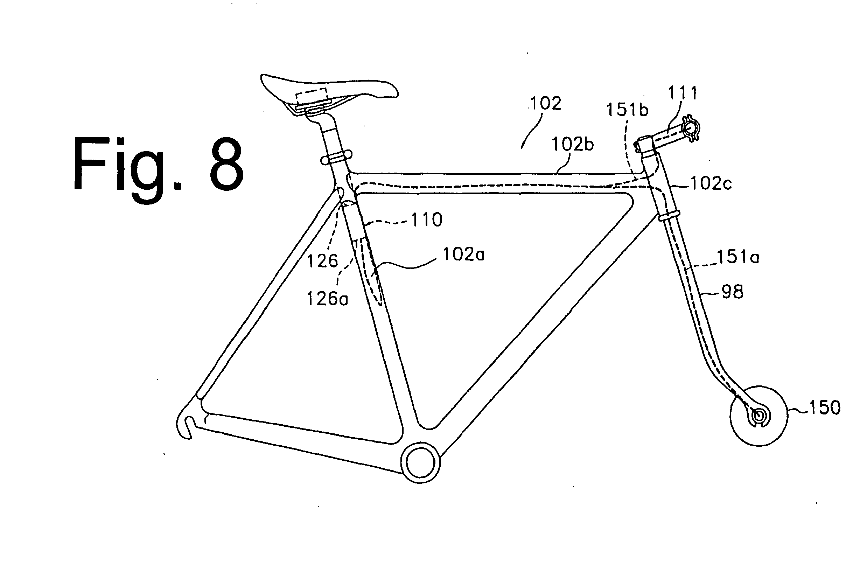

Fig. 8 shows an embodiment of wiring for electrical components mounted to frame 102. In this embodiment, all power and signal lines are communicated through the bottom 126a of housing 126. More specifically, a wiring groove (not shown) is formed on the inner peripheral surface of seat tube 102a or the outer peripheral surface of housing 126 so that wiring can pass between seat tube 102a and housing 126. A power supply input line 151a from a hub dynamo 150 mounted to front wheel 106f may pass through front fork 98 and then through a head tube 102c and a top tube 102b of frame 102. Similarly, a signal input line 151b from front and rear upshift and downshift switches 131f, 132f, 131r and 132r may pass through handlebar stem 111 and then through head tube 102c and top tube 102b. Power and signal input lines 151a and 151b then may pass into seat tube 102a, through the groove between seat tube 102a and housing 126, and then through the bottom 126a of housing 126.

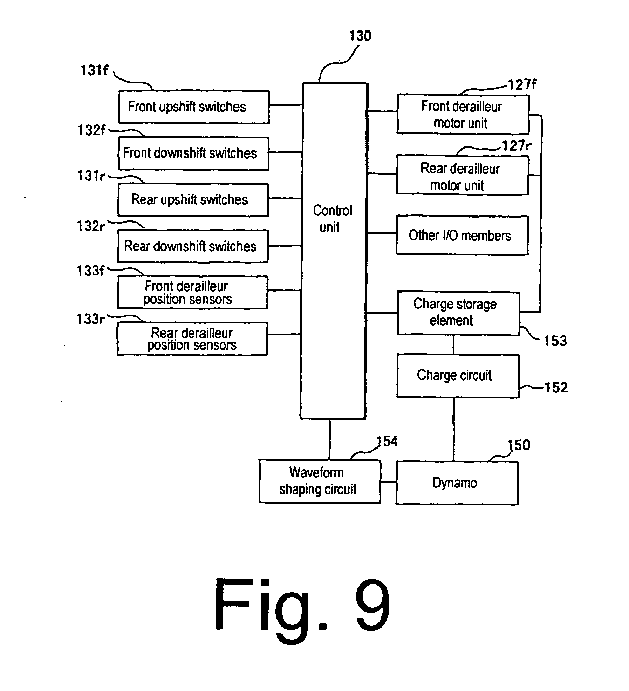

Fig. 9 is a schematic block diagram of another embodiment of control unit 130 and related components that may be used with hub dynamo 150 shown in Fig. 8. In this embodiment, a charge circuit 152 rectifies alternating current output from hub dynamo 150 into direct current, and this direct current is used to charge a power supply in the form of a charge storage element 153, which may be a rechargeable battery, a relatively large capacitor, or some other charge storage element. Charge storage element 153 may be used as the power supply for front derailleur motor unit 127f, rear derailleur motor unit 127r, control unit 130, and any other desired components. Additionally, a waveform shaping circuit 154 converts the alternating current signals output from hub dynamo 150 into pulses that may be used by control unit 130 to calculate the speed of the bicycle. Such pulses also may be used in systems that automatically operate front and rear derailleur motor units 127f and 127r based on bicycle speed. Since power is supplied by hub dynamo 150 instead of an external battery, and there is less chance that the power signals can be affected by water.

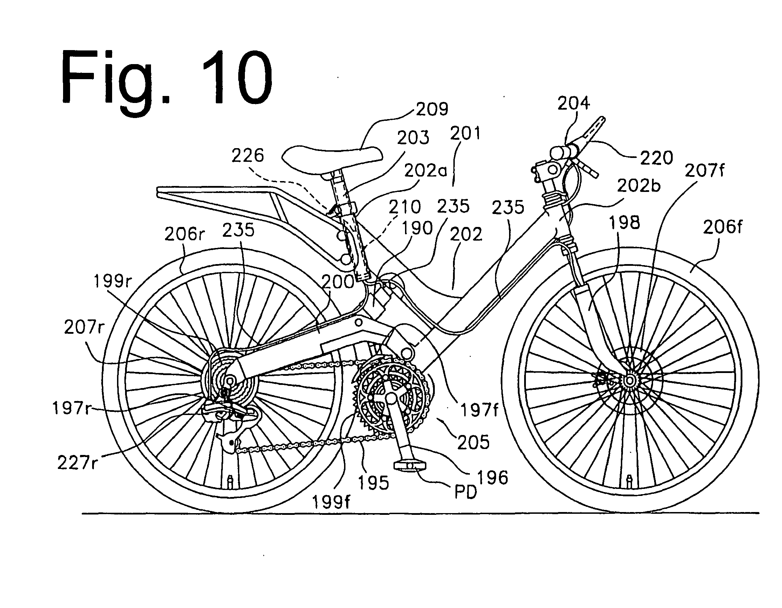

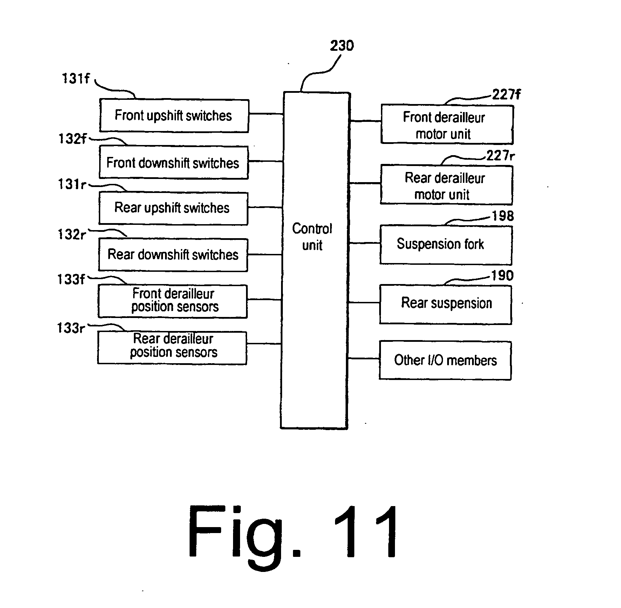

Fig. 10 is a side view of another embodiment of a bicycle 201, and Fig. 11 is a schematic block diagram of a particular embodiment of a suspension control apparatus used with the bicycle shown in Fig. 10. In this embodiment, bicycle 201 is a mountain bicycle comprising a frame 202, a rear swing arm 200 pivotably coupled to the lower middle portion of frame 202, a rear suspension 190 connected between swing arm 200 and frame 202, a front suspension fork 198 rotatably mounted to a head tube 202b of frame 202, a handlebar assembly 204 mounted to the upper part of fork 198, a front wheel 206f rotatably attached to the lower part of fork 198, a rear wheel 206r rotatably attached to the rear of swing arm 200, and a drive unit 205. A cycle computer 220 is mounted to handlebar assembly 204. A front disk brake 207f is provided for braking front wheel 206f, and a rear wheel brake 207r is provided for braking rear wheel 206r. A seat post 203 is detachably mounted within a seat tube 202a of frame 202. A saddle 209 is mounted to the top of seat post 203, and a control apparatus 210 including a housing 226 and a control unit 230 (Fig. 11) is mounted within seat post 203 at a bottom portion thereof. In this embodiment, control unit 230 controls the operation of front and rear derailleurs 197f and 197r as well as front suspension fork 198 and rear suspension 190. Control unit 230 may be connected to front suspension fork 198 and rear suspension 190 through appropriate wiring 235.

Drive unit 205 comprises a chain 195, a front sprocket assembly 199f coaxially mounted with a crank 196 having pedals PD, an electrically controlled front derailleur 197f attached to a seat tube 202a of frame 202, a rear sprocket assembly 199r coaxially mounted with rear wheel 206r, and an electrically controlled rear derailleur 197r. Front derailleur 197f is driven by a front derailleur motor unit 227f (Fig. 11), and rear derailleur 197r is driven by a rear derailleur motor unit 227r. As in the first embodiment, front and rear derailleur position sensors 133f and 133r sense the operating positions of front and rear derailleurs 197f and 197r, respectively. Front and rear upshift and downshift switches 131f, 132f, 131r and 132r may be provided in a manner similar to the first embodiment.

As in the first embodiment, since control apparatus 210 is stored in seat post 203, it is hidden from view and does not detract from the appearance of the bicycle or interfere with the operation of the bicycle, despite controlling front and rear derailleurs 197f and 197r, front suspension fork 198 and rear suspension 190. Since seat post 203 usually is not detached from the bicycle, control apparatus 210 always is available fir use, even when cycle computer 220 is detached. On the other hand, since seat post 203 is easily removed from seat tube 202a, control apparatus 210 may be easily removed for maintenance, replacement or repair.

While the above is a description of various embodiments of inventive features, further modifications may be employed without departing from the spirit and scope of the present invention. For example, while the front and rear derailleur motor units 127f and 127r were constructed integrally with front and rear derailleurs 97f and 97r, respectively, the teachings herein could be applied to motor units that are separately mounted and connected to their corresponding derailleurs by a cable. While derailleurs were used as bicycle transmissions, the teachings herein could be applied to internal hub transmissions or any other type of transmission. While control unit 130 was mounted in housing 126, control unit 130 may be directly mounted to seat post 103 or to cover member 140, or mounted using a resilient member.

The size, shape, location or orientation of the various components may be changed as desired. Components that are shown directly connected or contacting each other may have intermediate structures disposed between them. The functions of one element may be performed by two, and vice versa. The structures and functions of one embodiment may be adopted in another embodiment. It is not necessary for all advantages to be present in a particular embodiment at the same time. Thus, the scope of the invention should not be limited by the specific structures disclosed or the apparent initial focus or emphasis on a particular structure or feature but by the definition of the appended claims.

## Claims

1. Assembly comprising a seat post (103) and a bicycle control apparatus (110), said bicycle control apparatus (110 comprising:
a mounting member (126);
a control unit (130) having a control signal output terminal for outputting an output control signal to operate a moving bicycle component, wherein the control unit is disposed on the mounting member, the mounting member and the control unit being dimensioned to fit within a seat tube (102a) of a bicycle, wherein the mounting member comprises a housing (126) dimensioned to fit within the seat tube of the bicycle, wherein the mounting member (126) includes a post mounting structure (141, 141 b) structured to mount the mounting member to the seat post (103),
**characterized in that** the control unit is disposed within the housing, and, **in that** the post mounting structure comprising male fixation members (141b; 145c) adapted for engagement with female fixation members (103c;103e, 103f) of the seat post.

2. The assembly according to claim 1 wherein the mounting member (126) and the control unit (130) are dimensioned to fit within the seat post (103) that mounts within the seat tube (102a) of the bicycle.

3. The assembly according to claim 1 or 2 wherein the control unit (130) has a control signal input for receiving an input control signal to operate a moving bicycle component.

4. The assembly according to any one of claims 1 to 3 wherein the control unit (130) controls the operation of a bicycle transmission the operation of a derailleur and/or the operation of a bicycle suspension.

5. The assembly according to anyone of claims 1 to 4, wherein the post mounting structure (141b) includes a threaded member, structured to mount the mounting member to a seat post

6. The assembly according to claim 5 wherein the threaded member is structured to screw coaxially with the seat post.

7. The assembly according to any one of preceding claims, wherein the housing comprises:
a tubular member (140) that houses the control unit (130); and
a cover member (141) that mounts to an end of the tubular member.

8. The assembly according to claim 7 wherein the cover member (141) includes an opening (141e) dimensioned to receive electrical wiring therethrough.

9. The assembly according to claim 8 wherein the cover member (141) screws to the end of the tubular member (140), in particular to a threaded inner peripheral surface (140b) of the tubular member.

10. The assembly according to any one of claims 7 to 9 wherein the post mounting structure, in particular the cover member (141b), comprises a threaded outer peripheral surface disposed on the housing and dimensioned to screw to the seat post (103).

11. The assembly according to any one of claims 7 to 10 wherein the post mounting structure comprises one of a projection and a recess dimensioned to engage the other one of the projection and the recess in the seat post.

12. The assembly according to claim 11 wherein the post mounting structure, in particular the cover member (141b), includes the projection, wherein the projection is movably biased radially outwardly from the housing.

## Patentansprüche

1. Anordnung, umfassend eine Sattelstütze (103) und eine Fahrradsteuervorrichtung (110), wobei die Fahrradsteuervorrichtung (110) folgendes umfasst:
ein Montageteil (126);
eine Steuereinheit (130), aufweisend ein Steuersignalausgangsterminal zum Ausgeben eines Ausgangssteuersignals, um eine Bewegungsfahrradkomponente zu betätigen, wobei die Steuereinheit angeordnet ist an dem Montageteil, wobei das Montageteil und die Steuereinheit dimensioniert sind, um in ein Sattelrohr (102a) eines Fahrrads zu passen, wobei das Montageteil ein Gehäuse (126) umfasst, dimensioniert, um in das Sattelrohr des Fahrrads zu passen, wobei das Montageteil (126) eine Stützmontagestruktur (141, 141b) umfasst, strukturiert, um das Montageteil an der Sattelstütze (103) zu montieren, **dadurch gekennzeichnet, dass**
die Steuereinheit in dem Gehäuse angeordnet ist und **dadurch**, dass die Stützmontagestruktur männliche Festmachteile (141b; 145c) umfasst, angepasst zum Eingriff mit weiblichen Festmachteilen (103c; 103e, 103f) der Sattelstütze.

2. Anordnung gemäß Anspruch 1, wobei das Montageteil (126) und die Steuereinheit (130) dimensioniert sind, um in die Sattelstütze (103) zu passen, die in das Sitzrohr (102a) des Fahrrads zu montieren ist.

3. Anordnung gemäß Anspruch 1 oder 2, wobei die Steuereinheit (130) einen Steuersignaleingang zum Empfangen eines Eingangssteuersignals aufweist, um eine Bewegungsfahrradkomponente zu betätigen.

4. Anordnung gemäß einem der Ansprüche 1 bis 3, wobei die Steuereinheit (130) die Betätigung einer Fahrradtransmission, die Betätigung eines Umwerfers und/oder die Betätigung einer Fahrradsuspension steuert.

5. Anordnung gemäß einem der Ansprüche 1 bis 4, wobei die Stützmontagestruktur (141b) ein Gewindeteil umfasst, strukturiert, um das Montageteil an eine Sattelstütze zu montieren.

6. Anordnung gemäß Anspruch 5, wobei das Gewindeteil strukturiert ist zur Verschraubung koaxial mit der Sattelstütze.

7. Anordnung gemäß einem der vorherigen Ansprüche, wobei das Gehäuse folgendes umfasst:
ein röhrenförmiges Teil (140), das die Steuereinheit (130) aufnimmt; und
ein Abdeckteil (141), das an ein Ende des röhrenförmigen Teils zu montieren ist.

8. Anordnung gemäß Anspruch 7, wobei das Abdeckteil (141) eine Öffnung (141e) umfasst, dimensioniert, um eine elektrische Verdrahtung dadurch aufzunehmen.

9. Anordnung gemäß Anspruch 8, wobei das Abdeckteil (141) an das Ende des röhrenförmigen Teils (140) geschraubt ist, insbesondere an eine Gewindeinnenperipheriefläche (140b) des röhrenförmigen Teils.

10. Anordnung gemäß einem der Ansprüche 7 bis 9, wobei die Stützmontagestruktur, ins besondere das Abdeckteil (141b), eine Gewindeaußenperipheriefläche umfasst, angeordnet an dem Gehäuse und dimensioniert zur Verschraubung an der Sattelstütze (103).

11. Anordnung gemäß einem der Ansprüche 7 bis 10, wobei die Stützmontagestruktur eines von einem Vorsprung und einer Aussparung umfasst, dimensioniert, um mit dem anderen von dem Vorsprung und der Aussparung in der Sattelstütze in Eingriff zu gelangen.

12. Anordnung gemäß Anspruch 11, wobei die Stützmontagestruktur, insbesondere das Abdeckteil (141b), den Vorsprung umfasst, wobei der Vorsprung beweglich beaufschlagt ist radial nach außen von dem Gehäuse.

## Revendications

1. Assemblage comprenant une tige de selle (103) et un système de commande de bicyclette (110), ledit système de commande de bicyclette (110) comprenant :
un élément de montage (126) ;
une unité de commande (130) ayant un terminal de sortie de signal de commande pour transmettre un signal de commande de sortie pour actionner un composant de bicyclette mobile, l'unité de commande étant disposée sur l'élément de montage, l'élément de montage et l'unité de commande étant dimensionnés pour rentrer dans un tube de selle (102a) d'une bicyclette, l'élément de montage comprenant un boitier (126) dimensionné pour rentrer dans le tube de selle de la bicyclette, l'élément de montage (126) comprenant une structure de montage de tige (141, 141 b) structurée pour monter l'élément de montage à la tige de selle (103),
**caractérisé en ce que** l'unité de commande est disposée à l'intérieur du boitier et **en ce que** la structure de montage de tige comprenant des éléments de fixation mâles (141b ; 145c) agencés pour être en prise avec des éléments de fixation femelles (103c ; 103e, 103f) de la tige de selle.

2. Assemblage selon la revendication 1, dans lequel l'élément de montage (126) et l'unité de commande (130) sont dimensionnés pour rentrer à l'intérieur de la tige de selle (103) qui se monte à l'intérieur du tube de selle (102a) de la bicyclette.

3. Assemblage selon la revendication 1 ou 2, dans lequel l'unité de commande (130) a une entrée de signal de commande pour recevoir un signal de commande d'entrée pour actionner un composant mobile de bicyclette.

4. Assemblage selon l'une quelconque des revendications 1 à 3, dans lequel l'unité de commande (130) commande le fonctionnement d'une transmission de bicyclette, le fonctionnement d'un dérailleur et/ou le fonctionnement d'une suspension de bicyclette.

5. Assemblage selon l'une quelconque des revendications 1 à 4, dans lequel la structure de montage de tige (141b) comprend un élément fileté structuré pour monter l'élément de montage sur la tige de selle.

6. Assemblage selon la revendication 5 dans lequel l'élément fileté est structuré pour un vissage coaxialement à la tige de selle.

7. Assemblage selon l'une quelconque des revendications précédentes, dans lequel le boitier comprend :
un élément tubulaire (140) qui loge l'unité de commande (130) ; et
un élément de couvercle (141) qui se monte à l'extrémité de l'élément tubulaire.

8. Assemblage selon la revendication 7, dans lequel l'élément de couvercle (141) comprend une ouverture (141e) dimensionnée pour y recevoir un câblage électrique.

9. Assemblage selon la revendication 8, dans lequel l'élément de couvercle (141) visse à l'extrémité de l'élément tubulaire (140), en particulier à une surface périphérique interne filetée (140b) de l'élément tubulaire.

10. Assemblage selon l'une quelconque des revendications 7 à 9, dans lequel la structure de montage de tige, en particulier l'élément de couvercle (141b), comprend une surface périphérique externe filetée disposée sur le boitier et dimensionnée pour se visser à la tige de selle (103).

11. Assemblage selon l'une quelconque des revendications 7 à 10, dans lequel la structure de montage de tige comprend l'un d'une projection et d'un évidement dimensionné pour être en prise avec l'autre de la projection et de l'évidement dans la tige de selle.

12. Assemblage selon la revendication 11, dans lequel la structure de montage de tige, en particulier l'élément de couvercle (141b), comprend la projection, dans lequel la projection est sollicitée, de façon mobile, radialement vers l'extérieur depuis le boitier.
